**Europäisches Patentamt**

(19) **European Patent Office**

**Office européen des brevets**

(11) Veröffentlichungsnummer: **0 152 552**
**B1**

(12) # EUROPÄISCHE PATENTSCHRIFT

(45) Veröffentlichungstag der Patentschrift:
04.01.89

(51) Int. Cl.⁴: **G 01 B 21/02**

(21) Anmeldenummer: **84113876.1**

(22) Anmeldetag: **16.11.84**

(54) Gekapselte Längen- oder Winkelmesseinrichtung.

(30) Priorität: **07.01.84 DE 3400395**

(43) Veröffentlichungstag der Anmeldung:
**28.08.85 Patentblatt 85/35**

(45) Bekanntmachung des Hinweises auf die Patenterteilung:
**04.01.89 Patentblatt 89/1**

(84) Benannte Vertragsstaaten:
**AT CH DE FR GB IT LI NL SE**

(56) Entgegenhaltungen:
**AT-B-357 340**
**DE-C-2 846 768**
**FR-A-2 419 505**

(73) Patentinhaber: **Dr. Johannes Heidenhain GmbH,
Nansenstrasse 17, D-8225 Traunreut (DE)**

(72) Erfinder: **Miller, Walter, Dr., Adalbert- Stifter-
Strasse 19, D-8220 Traunstein (DE)**

LIBER, STOCKHOLM 1989

**Beschreibung**

Die Erfindung bezieht sich auf eine Längen- oder Winkelmeßeinrichtung nach dem Oberbegriff des Anspruches 1.

Bei gekapselten Meßeinrichtungen ist es erforderlich, im Gehäuse einen Längsschlitz vorzusehen, durch den ein Mitnehmer ins Innere des Gehäuses hineinragen kann, um die dort befindliche Baueinheit zum Abtasten der Meßteilung mit dem außerhalb des Gehäuses angebrachten Montagefuß zu verbinden. Bei Relativbewegungen von beispielsweise Bett und Schlitten einer Maschine wird die Maschinenbewegung auf die Meßteilung bzw. die Abtastbaueinheit übertragen, wobei der Mitnehmer innerhalb des Schlitzes in Bewegungsrichtung relativ verfahren und die Bewegung gemessen wird.

Zum Schutze der hochempfindlichen Meßteilung muß der Schlitz im Gehäuse möglichst gut verschlossen sein, und nur im Bereich des Mitnehmers soll eine Durchtrittsmöglichkeit zum Innern des Gehäuses gegeben sein.

Eine derartige Meßeinrichtung zeigt die DE-PS-2 846 768, bei der ein Maßstab und eine Abtasteinheit in einem Hohlkörper eingebracht sind, der einen in Meßrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Bei der vorgenannten Meßeinrichtung müssen die Dichtlippen zur möglichst hermetischen Abschirmung des Gehäuses eng am Mitnehmer anliegen und daher elastisch mit hoher Rückstellkraft ausgebildet sein. Infolge der durch die hohen Rückstellkräfte auftretenden Reibungskräfte am Mitnehmer bei der Meßbewegung kann der Mitnehmer Deformationen in Meßrichtung erfahren, die der Meßgenauigkeit abträglich sind. Die Aufbiegung der Dichtlippen durch den Mitnehmer hat Tordierungen der Dichtlippen in Längserstreckung des Schlitzes zur Folge, so daß auch bei günstiger schwertförmiger Querschnittsausbildung des Mitnehmers kleine, von den Dichtlippen nicht verschlossene Bereiche an den Enden des Mitnehmers unvermeidlich sind.

Der Erfindung liegt daher die Aufgabe zugrunde, eine Meßeinrichtung zu schaffen, bei der die Abdichtung des Gehäuseschlitzes vor allem im Bereich des Mitnehmers und seinen Enden verbessert wird.

Diese Aufgabe wird durch eine Meßeinrichtung mit den kennzeichnenden Merkmalen des Anspruchs 1 gelöst.

Die besonderen Vorteile der erfindungsgemäßen Abdichtung der Meßeinrichtung liegen in der Widerstandsfähigkeit der Dichtlamellen, selbst gegen Späne und in der erzielbaren wirksamen Abdichtung auch gegen flüssige Kühlmittel und dgl.. Dabei wird die Reibung zwischen Dichtlamellen und Mitnehmer durch die Ausgestaltung der Erweiterungen am Mitnehmer stark herabgesetzt.

Mit Hilfe von Ausführungsbeispielen soll die Erfindung anhand der Zeichnungen noch näher erläutert werden.

Es zeigen:

Figur 1   einen schematischen Querschnitt durch eine Meßeinrichtung mit geschlossenen Dichtelementen,

Figur 2   die Meßeinrichtung gemäß Figur 1 mit Mitnehmer,

Figur 3   eine Teilansicht der Meßeinrichtung gemäß Figur 2 im Längsschnitt,

Figur 4   eine Untersicht auf Figur 3

Figur 5   eine Variante einer Meßeinrichtung gemäß Figur 2,

Figur 6   eine Meßeinrichtung mit geschlossenen Dichtelementen einer anderen Bauform und

Figur 7   eine Meßeinrichtung gemäß Figur 6 mit Mitnehmer.

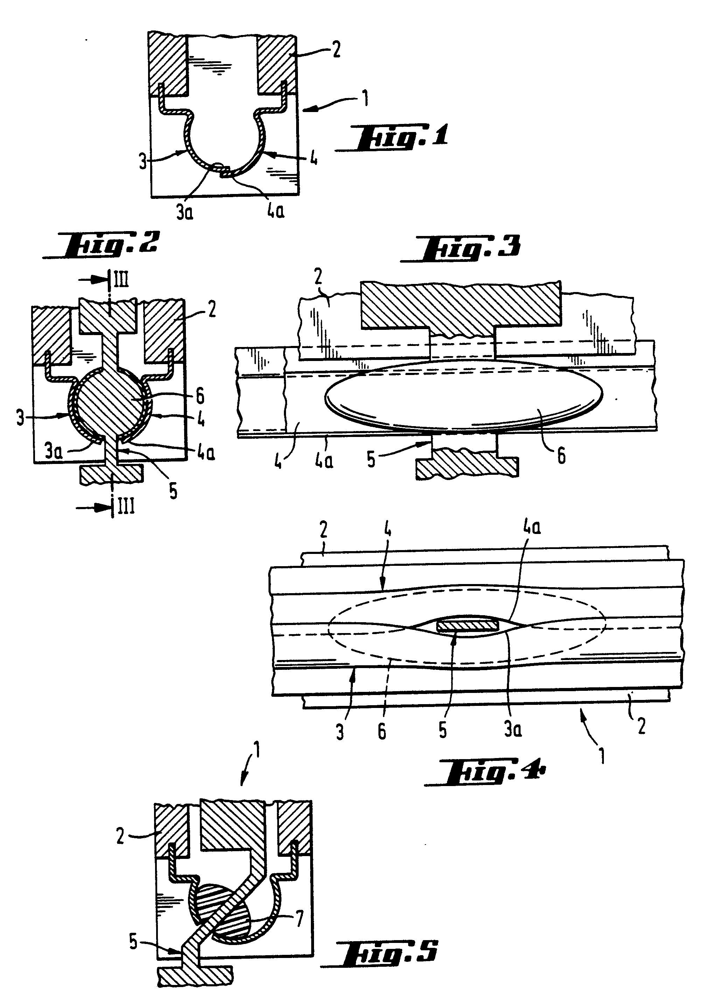

Von einer in Figur 1 schematisch dargestellten Meßeinrichtung 1 ist ein Querschnitt durch das Gehäuse gezeigt, in einer Lage, in der die Dichtelemente geschlossen sind. Die Dichtelemente sind als geschlitztes Rohr 3 und 4 ausgebildet, dessen Flanken 3a und 4a sich im Schlitzbereich überlappen. Durch diese Überlappung wird der Schlitz im Rohr 3, 4 abgedichtet, so daß keine schädlichen Umgebungseinflüsse auf das Innere des Gehäuses 2 einwirken können. Die Meßeinrichtung 1 ist somit vollständig gekapselt.

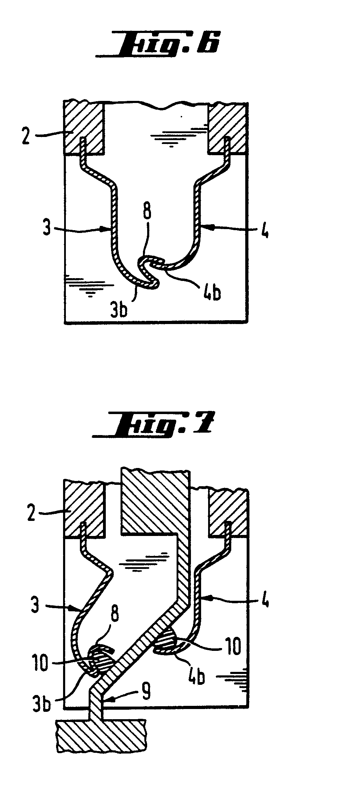

In Figur 2 ist die vorbeschriebene Meßeinrichtung 1 an einem Ort geschnitten dargestellt, an dem ein Mitnehmer 5 durch das Rohr 3, 4 greift. Das Rohr 3, 4 wird dadurch aufgespreizt. Der entstehende Spalt wird durch ein Rotationsellipsoid 6 abgedichtet, das am Mitnehmer 5 unmittelbar hinter der inneren Rohrwandung der Dichtelemente 3 und 4 angebracht ist. Das Rotationsellipsoid 6 ist so geformt, daß es sich an das aufgespreizte Rohr 3, 4 anschmiegt und so weit über den Mitnehmer 5 hinausragt, daß alle Partien des Spaltes, der sich durch die Aufspreizung ergibt, abgedichtet sind.

In Figur 3 und 4 werden Einzelheiten und Wirkungsweise des mit dem Rotationsellipsoid 6 versehenen Mitnehmers 5 verdeutlicht.

In Figur 5 ist die Erweiterung am Mitnehmer 5 als allgemeines Ellipsoid 7 ausgeführt, was den Vorteil der geringeren Masse hat. Die Wirkung hinsichtlich der Abdichtung ist sinngemäß die gleiche wie beim Rotationsellipsoid 6.

Eine Abwandlung des geschlitzten Rohres 3, 4 zeigt die Figur 6, bei der in die eine Rohrflanke 3b eine Tasche 8 eingeformt ist, in die die zweite Rohrflanke 4b eingreift. Durch diesen Eingriff ist der Schlitz überlappt und die freie Rohrflanke 4b wird von zwei Seiten dichtend umschlossen.

Wie in Figur 7 ersichtlich ist, trägt der Mitnehmer 9 Erweiterungen 10, ähnlich wie in Figur 5. Die Form der Erweiterungen 10 wird auf die Tasche 8 der Flanke 3b und den inneren Krümmungsradius des Rohres abgestimmt, so daß sich auch hier eine abdichtende Anschmiegung der zusammenwirkenden Bauteile ergibt.

Die Materialpaarung wird der Fachmann so vornehmen, daß sich gute Abdichteigenschaften bei geringst möglicher Reibung ergeben. Zur Abdichtung kleinster Spalte kann im Innern des Rohres Dichtflüssigkeit, z. B. Öl vorgesehen sein, das an den Schmiermittelkreislauf der Maschine angeschlossen ist.

Ferner besteht die Möglichkeit, ins Innere des Rohres ein Gas mit Überdruck einzuleiten, so daß Verunreinigungen ausgeblasen, bzw. nicht eingelassen werden.

## Patentansprüche

1. Gekapselte Meßeinrichtung, insbesondere Längen- oder Winkelmeßeinrichtung, zur Messung der Lage zweier relativ zueinander beweglicher Objekte, deren mit einem der beiden Objekte verbundenes Gehäuse an zumindest einer Seite einen in Bewegungsrichtung des beweglichen Objektes verlaufenden Schlitz aufweist, der mittels biegsamer Abdeckmittel abgedichtet ist, durch die ein mit dem anderen Objekt verbundener Mitnehmer hindurchgreift, der seinerseits mit einer im Gehäuse untergebrachten, zur Messung dienenden Baueinheit verbunden ist, dadurch gekennzeichnet, daß die Abdeckelemente in Form eines geschlitzten Rohres (3, 4) ausgebildet sind, dessen Flanken (3a, 3b, 4a, 4b) sich im Schlitzbereich überlappen, und daß der Mitnehmer (5, 9) unmittelbar innerhalb des geschlitzten Rohres (3, 4) Erweiterungen (6, 7, 10) aufweist, die sich über den Querschnitt des Mitnehmers (5, 9) im Bereich seines Durchgriffs durch das geschlitzte Rohr (3, 4) hinaus erstrecken.

2. Gekapselte Meßeinrichtung nach Anspruch 1, dadurch gekennzeichnet, daß eine Flanke (3b) des geschlitzten Rohres (3, 4) entlang des Schlitzes eine Tasche (8) aufweist, in die im geschlossenen Zustand die zweite Flanke (4b) - den Schlitz überlappend - eingreift.

3. Gekapselte Meßeinrichtung nach Anspruch 1, dadurch gekennzeichnet, daß der Mitnehmer (5) eine Erweiterung in Form eines Rotationsellipsoides (6) aufweist.

4. Gekapselte Meßeinrichtung nach den Ansprüchen 1 oder 2, dadurch gekennzeichnet, daß der Mitnehmer (5, 9) eine Erweiterung in Form eines Ellipsoides (7) bzw. an jeder Seite des Schlitzes eine Erweiterung in Form eines halben Ellipsoides (10) aufweist.

5. Gekapselte Meßeinrichtung nach Anspruch 1, dadurch gekennzeichnet, daß das geschlitzte Rohr (3, 4) ein metallisches Rohr ist.

6. Gekapselte Meßeinrichtung nach Anspruch 1, dadurch gekennzeichnet, daß sich im Innern des geschlitzten Rohres (3, 4) Druckluft oder Dichtflüssigkeit befindet.

7. Gekapselte Meßeinrichtung nach den Ansprüchen 1 oder 3 oder 4, dadurch gekennzeichnet, daß die Erweiterungen (6, 7, 10) des Mitnehmers (5, 9) in reibungsarmem Kunststoff ausgeführt sind.

## Claims

1. Encapsulated measuring device, especially length or angle measuring device, for measuring the position of two objects movable relative to one another, whose housing connected to one of the two objects has on at least one side a slit running in the direction of movement of the movable object, which is sealed by means of yieldable cover means, through which engages a carrier connected to the other object, which carrier is for its part connected to a unit serving for the measurement fitted in the housing, characterized in that the cover elements are constructed in the form of a slit tube (3, 4), whose flanks (3a, 3b, 4a, 4b) overlap in the slit region, and in that the carrier (5, 9) has enlargements (6, 7, 10) directly inside the slit tube (3, 4) which extend beyond the cross-section of the carrier (5, 9) in the region of its engagement through the slit tube (3, 4).

2. Encapsulated measuring device according to claim 1, characterized in that one flank (3b) of the slit tube (3, 4) has a pocket (8) along the slit, in which in which engages in the closed state the second flank (4b) - overlapping the slit.

3. Encapsulated measuring device according to claim 1, characterized in that the carrier (5) has an enlargement in the form of an ellipsoid of revolution (6).

4. Encapsulated measuring device according to claim 1 or 2, characterized in that the carrier (5, 9) has an enlargement in the form of an ellipsoid (7) or on each side of the slit an enlargement in the form of a half ellipsoid. (10).

5. Encapsulated measuring device according to claim 1, characterized in that the slit tube (3, 4) is a metallic tube.

6. Encapsulated measuring device according to claim 1, characterized in that there is pressurised air or sealing fluid in the inside of the slit tube (3, 4).

7. Encapsulated measuring device according to claim 1 or 3 or 4, characterized in that the enlargements (6, 7, 10) of the carrier (5, 9) are made of low friction plastics material.

## Revendications

1. Dispositif de mesure blindé, en particulier dispositif de mesure de longueurs ou d'angles pour mesurer la position de deux objets mobiles l'un par rapport à l'autre dont le boîtier, raccordé à l'un des deux objets, comporte, sur au moins un côté, une fente qui est disposée dans le sens du déplacement de l'objet mobile, qui est étanchée par des moyens d'obturation flexibles et à travers laquelle passe un entraîneur qui est raccordé à l'autre objet et qui est lui-même relié à une unité de construction logée dans le boîtier et servant à la mesure, caractérisé par le fait que les éléments d'obturation sont réalisés sous la forme d'un tube fendu (3, 4) dont les flancs (3a, 3b, 4a, 4b) se chevauchent dans la zone de la fente, et que l'entraîneur (5, 9), immédiatement à l'intérieur du tube fendu (3, 4), comporte des élargissements (6, 7, 10) qui s'étendent sur la section transversale de l'entraîneur (5, 9) dans la zone de son passage à travers le tube fendu (3, 4).

2. Dispositif de mesure blindé selon la revendication 1, caractérisé par le fait qu'un flanc (3b) du tube fendu (3, 4) comporte le long de la fente une poche (8) dans laquelle le second flanc (4b) s'engage en position fermée - en recouvrant la fente.

3. Dispositif de mesure blindé selon la revendication 1, caractérisé par le fait que l'entraîneur (5) comporte un élargissement ayant la forme d'un éllipsoïde ce révolution (6).

4. Dispositif de mesure blindé selon la revendication 1 ou 2, caractérisé par le fait que l'entraîneur (5, 9) comporte un élargissement ayant la forme d'un éllipsoïde (7) ou, de chaque côté de la fente, un élargissement ayant la forme d'un demi-éllipsoïde (10).

5. Dispositif de mesure blindé selon la revendication 1, caractérisé par le fait que le tube fendu (3, 4) est un tube métallique.

6. Dispositif de mesure blindé selon la revendiation 1, caractérisé par le fait qu'à l'intérieur du tube fendu (3, 4) se trouve de l'air comprimé ou un liquide d'étanchéité.

7. Dispositif de mesure blindé selon les revendications 1 ou 3 ou 4, caractérisé par le fait que les élargissements (6, 7, 10) de l'entraîneur (5, 9) sont réalisés en matière plastique à faible coefficient de frottement.

Fig.1

Fig.2

Fig.3

Fig.4

Fig.5

# Fig. 6

# Fig. 7